# EUROPEAN PATENT SPECIFICATION

(11) **EP 1 841 030 B1**
(45) Date of publication and mention of the grant of the patent: **15.07.2009**
(21) Application number: 06425209.1
(22) Date of filing: 29.03.2006
(51) Int. Cl.: H02G 5/08

(54) **Waterproof prewired plug for electrical connection to a bus duct**
Wasserdichter verkabelter Stecker für eine Stromschiene
Connecteur étache destiné à être relié à des barres omnibus

(43) Date of publication of application: 03.10.2007
(73) Proprietor: BTICINO S.P.A., 20154 Milano (IT)
(72) Inventor: Fabrizi, Fabrizio, 24100 Bergamo (IT)
(74) Representative: Simino, Massimo

(56) References cited:
- EP-A- 0 670 197
- US-A- 2 264 075
- US-A- 2 590 522

## Description

The present invention relates to a waterproof prewired electric plug for electrical connection to a bus duct, which is also waterproof.

It is known that prefabricated duct sections, which are currently known as armoured busbars or bus ducts, for distributing electric power within buildings, in particular for industrial use or for offices, warehouses, shopping centres and the like, consist of sections with a standard length, for example 1, 2 or 3 metres, able to be connected at their ends so as to obtain the longitudinal extension required for each specific application.

Electrical connections for supplying power to user equipment may then be effected at any point along their length.

These prefabricated sections must satisfy a variety of requirements: in addition to the capacity to convey high currents in the range of several tens of amperes (typically 25 to 40 A), they must ensure maximum safety during any operations performed after their installation and, in many types of installations, such as, for example, those under floors of the so-called "floating" type or inside false ceilings and in any case in locations where there is the risk of possible water infiltration, they must ensure imperviousness to liquids, namely they must be waterproof.

If the safety requirement for operations performed by operating personnel (or "finger test requirement") may be satisfied with relatively simple and low-cost measures, as for example described in the European patent application EP 1049227 in the name of the same Applicant, the requirement for the installation to be waterproof has hitherto been satisfied with particularly complex and costly structures which make both the laying and subsequent adaptation of the installation, such as the provision of new power points, removal of existing ones and expansion of the installation, particularly difficult and laborious.

European patent application EP-A-1 750 342 , (published on 07.02.2007) filed by the Applicant, proposes and describes a prefabricated duct section which avoids these drawbacks and provides an extremely simple structure which can be produced in a low-cost manner, in large volumes and satisfies the abovementioned requirements.

For this type of prefabricated section, however, it is necessary to envisage corresponding waterproof devices, namely electric plugs which allow the electrical connection of user equipment at any point along the length of the bus ducts.

For example, EP 00015356 discloses power plugs which allow an electrical connection at any point along the length of a bus duct, but these plugs are not waterproof, nor is the bus duct.

Another example of electrical plug for connection to a bus duct is provided by US 2.590.522. The plug comprises an adapter plate for supporting and fastening to the bus duct and, hinged thereto, a plug body which, owing to a toggle mechanism, can assume two operating positions, of electrical connection and disconnection respectively.
Again the plug is not waterproof.

On the other hand, waterproof electrical connection devices which may be connected to waterproof bus ducts only in predetermined positions along them, provided for this purpose, are known.

Moreover, the connection may be performed only by means of laborious operations and using suitable equipment and often requires the decommissioning of the installation.

The operations of disconnecting and restoring the watertightness of the bus duct in the case of removal of a plug are likewise laborious.

These drawbacks are overcome by the waterproof electrical plug which is the subject of the European patent application EP-A-1 816 395 filed February 2, 2006 by the present applicant (published on 08.08.2007).

Howether another drawback of waterproof electrical connection devices consists in the fact that their wiring (namely the connection of the plug to a sheathed multipole cable) involves laborious assembly and disassembly operations, and their structure, precisely in order to ensure the watertightness of the component and its connection to the bus duct, is particularly bulky.

The present invention solves these problems and provides a waterproof, prewired, electrical connection plug, which has very small dimensions, which may be inserted at any point along the length of a bus duct of the type mentioned above, by means of a simple two-stage operation, involving engagement and electrical connection, respectively, without the need for any tools and without it being necessary to decommission the installation.

Both the plugging-in and the removal operation may be performed under totally safe conditions, without the possibility of the operating personnel making errors and accidentally coming into contact with the live electrical parts.

Moreover, using the same components, the operation of prewiring, performed at the factory, allows diversification of the product and the production of prewired plugs able to satisfy the most widely varying requirements.

Generally, in fact, the user requires the connection to a single phase and to the neutral of a three-phase (generally polyphase) system and only occasionally the connection to the three phases, for example for powering motors.

In the case of a connection to a single phase, the latter must be chosen from among the various phases available so as to obtain balancing of the load, using one phase for powering one part of the installation and the other phases for powering the other parts of the installation.

According to the invention these results are achieved with a plug structure as defined in the accompanying claims.

The characteristic features and advantages of the invention will emerge more clearly from the description which follows of a preferred embodiment, provided with reference to the accompanying drawings in which:
- Figure 1 is a cross-sectional view through a prefabricated duct section to which the plug according to the present invention is intended to be connected;
- Figure 2 is a perspective view of a waterproof plug in accordance with the present invention, installed on a bus duct in an operating position where it is disconnected;
- Figure 3 is a perspective view of the plug according to Figure 2 in an operating position where it is electrically connected;
- Figure 4 is a partially exploded perspective view of the plug according to Figures 2 and 3; the view is from below, namely from the side intended to be connected to the bus duct;
- Figure 5 is a partially sectioned perspective view of a constructional detail of the plug consisting of a part for supporting and positioning an electrical contact clamp of the plug;
- Figure 6 is an exploded perspective view of a preferred embodiment of a contact clamp for the plug according to the preceding figures;
- Figure 7 is an exploded perspective detailed view of the various components of the plug according to the preceding figures;
- Figure 8 is a perspective view, from below, with reference to the view of Figure 7, of a component of the plug with the function of supporting the contact clamps and the associated wires.

For a better understanding of the invention it is necessary to provide firstly a brief description of the prefabricated duct section (referred to below more simply as a duct or bus duct) to which the plug connector is intended to be connected.

For more detailed information on the duct and a preferred embodiment thereof, reference may be made to the already cited European patent application EP 05425579.9.

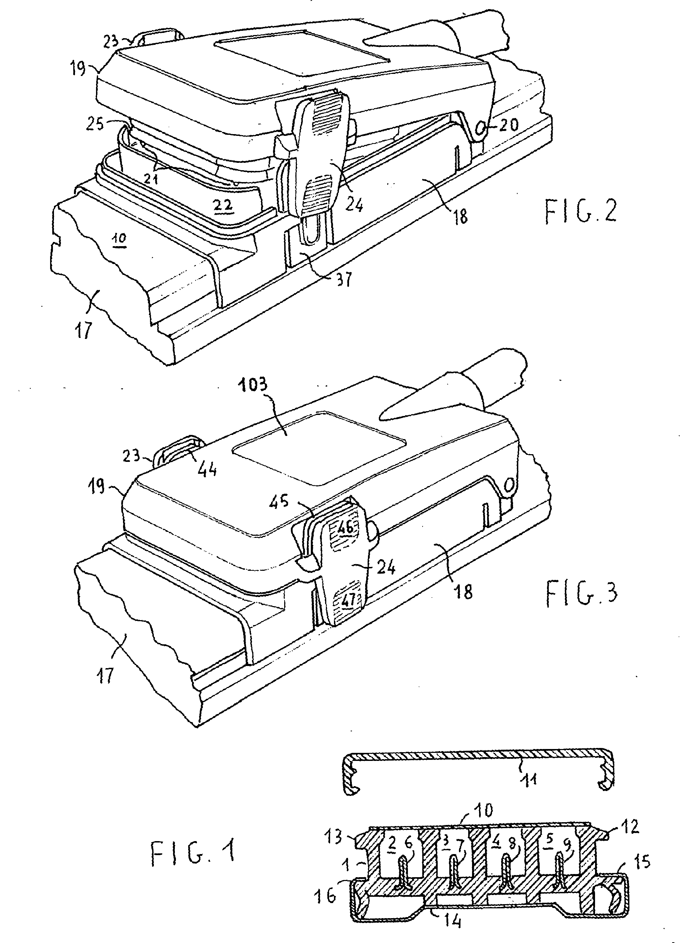

Figure 1 shows a cross-section through the bus duct. The latter comprises a straight extruded body 1 made of an insulating plastic material (PVC and the like) and having, formed therein, a plurality of slots, for example four in number 2,3,4,5, inside each of which a vertical conducting bar, 6,7,8,9, respectively, co-extruded with the body 1, is housed.

Advantageously, the bars 6-9 are obtained by means of folding a flat strip of copper or aluminium, so as to form a cross-section in the form of an overturned "T", with bottom flanges incorporated in the body 1.

At the top, with reference to the view according to Fig. 1, the slots are closed by a plastic insulating sheet 10 able to be perforated, along the entire length of the duct, so as to be watertight, except at the ends of the duct.

Although not indispensable, it is possible to envisage a protection of the sheet 10, consisting of a plastic cover 11 which is snap-engaged onto flanges 12,13 of the body 1 and can be easily removed so as to allow, at any point along the length of the duct, an electrical connection with the bars 6-9 by means of perforation of the sheet 10.

At the bottom the body 1 is enclosed inside a metal casing 14 obtained by means of folding of a metal sheet with flanges 15,16 folded inwards and engaged in a watertight manner with corresponding flanges of the body 1.

Conveniently, the casing 14, in addition to the function of reinforcing and protecting the body 1, also has the function of an earth conductor.

By way of conclusion of the description of the duct according to Figure 1 it must be pointed out that the profile of the cross-section is asymmetrical with respect to a vertical mid-plane A-A.

In particular, it may be noted that the two flanges 15,16 of the casing have a different horizontal extension, which is greater for the flange 15 and smaller for the flange 16.

The purpose of this measure is to "polarize" mechanically the duct in a continuous manner, along the whole of its length, and ensure that electrical connectors, whether they be end or middle connectors, are connected to the duct in a uniquely defined manner.

The same result may be achieved with a casing 14 where the flanges 15,16 have the same horizontal extension, but are arranged at a different height relative to the bottom of the casing or by envisaging for the body 1 flanges 12,13 of different thickness, as shown precisely in Figure 1, where the flange 13 has a thickness greater than that of the flange 12.

Obviously combining the various measures is possible and may be convenient.

Let us consider now, with reference to Figures 2 and 3, a preferred embodiment of a waterproof plug for electrical connection to the bus duct already described.

The plug essentially consists of a support frame 18 made of a plastic material, such as nylon, polypropylene and the like, which is injection-moulded, and a plug body 19.

The frame 18, which has exclusively a mechanical function of supporting and ensuring correct positioning on the bus duct, is engaged in a permanently attached, although removable manner on the bus duct 17, in contact with the insulating sheet 10.

The engaging means will be described in detail further below, with combined reference to Figures 2, 3 and 4.

The plug body 19 contains the parts for electrical connection to the bus duct and in particular a plurality of electrical contact clamps which protrude from the bottom side of the body 19 so as to enter into contact with the conducting bars of the bus duct 17.

In Figure 2 a pair of these clamps, identified by the reference number 21, is partially visible.

The plug body 19 is hinged at one of its ends, in the direction of the bus duct, on a pair of pivot pins of the frame 18, one 20 of which is visible in Figures 2 and 3.

The hinge-type connection allows the body 19 to rotate relative to the frame 18 and to assume an operating position where it is electrically disconnected, shown in Figure 2, and an operating position where it is electrically connected, shown in Figure 3.

Obviously the electrical connection is established only if the frame 18 is engaged with the bus duct.

When the frame 18 is engaged with the bus duct, as shown in Figure 2, and the plug body is in the operating position where it is electrically disconnected, the contact clamps 21 are conveniently situated at a distance from the sheet 10 of the bus duct and at the same time are inaccessible from outside the plug because they are masked by a shield 22 which is formed integrally with the support frame 18 and by the sides of the frame 18.

When the plug body is pushed and moved towards the frame 18, into the operating position where it is electrically connected (Figure 3), by actuation of engaging and locking devices, which are described in detail further below, the contact clamps 21 perforate the insulating sheet 10, penetrate into the slots 2,3,4,5 (Fig. 1) of the bus duct and enter into contact with the conducting bars.

At the same time, a resilient seal 25 (Fig. 2) which surrounds the pins 21 and is formed integrally with the body 19, comes into contact with the insulating sheet 10 of the bus duct and engages hermetically with the latter.

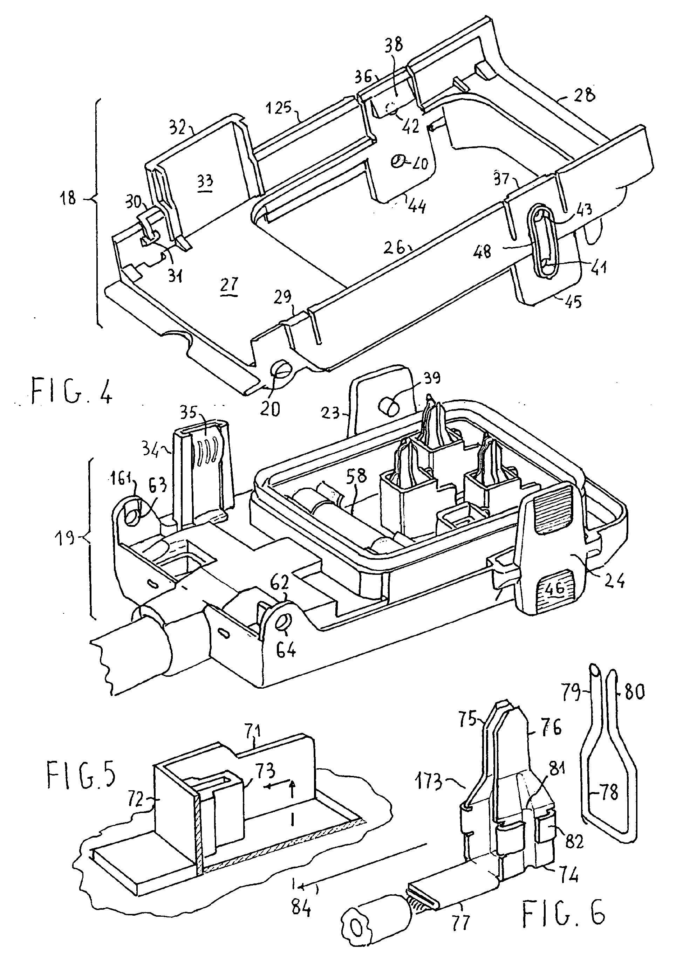

With reference to Figure 4, the support frame 18 consists of two sidewalls 125,26 connected by two cross-pieces 27,28 for resting on the sheet 10 of the bus duct, while the sidewalls 125,26 are juxtaposed on the flanks thereof.

The sidewalls 125,26 have, cut therein, two relatively elastic arms 29,30 each of which with an internal relief (only one of which 31 is visible in the figure) arranged at a different height.

The reliefs snap-engage removably, underneath the flanges 12,13 of the bus duct, only if the frame 18 is arranged correctly on the bus duct in the position uniquely defined by polarization thereof, consisting of the different thickness of the two flanges 12,13.

The sidewall 125 extends over a greater height in the form of a skirt 32 which is juxtaposed on the flange 16 of the bus duct (projecting less laterally) while the interference with the flange 15 thereof (projecting more laterally) also ensures a uniquely defined position of the frame on the bus duct.

The inner side of the skirt has, formed therein, a recess which is open at the bottom and inside which a support arm 34 for an earth contact shoe 35 is slidably seated.

The arm 34 and the shoe 35 form part of the plug body 19.

The engagement of the frame 18 on the bus duct in a permanently attached manner is ensured by two opposite elastic levers of the first order 36,37, each of which formed, by means of suitable slits, in one of the sidewalls, 125,26 respectively, and each provided, at one of its ends, with an engaging tooth (only one 38 is visible) which engages with each one of the flanges 13,12 of the bus duct, respectively.

The engaging teeth, such as 38, are also arranged at a different height depending on the different thickness of the flanges 12,13 of the bus bar.

Operation of the levers 36,37 for disengagement of the bus duct occurs indirectly.

The plug body, also, is in fact provided, on its sides, with a pair of elastic levers of the first order 23,24 which are arranged externally, conveniently spaced, over the levers 36,37 of the frame 18, respectively, and are each engaged mechanically with the said levers by means of a pin (only one, 39, is visible in Figure 4) which engages, in the operating position of the plug body relative to the frame 18, respectively in either one of the two seats 40,41, 42,43, formed in each of the levers 36,37 (in the seats 40,41 for the disconnected operating position and in the seats 42,43 for the electrically connected operating position).

Before describing operation of the engaging device it must be pointed out that, when the plug body is in the electrically connected operating position, as shown in Figure 3, the top part 44,45 (opposite the engaging teeth such as 38) of the levers 36,37 respectively makes contact with the sides of the plug body, so that the two levers 36,37 are unable to rotate in the direction which causes opening of the engaging teeth such as 38.

On the other hand, when the plug body is in the disconnected operating position, as shown in Figure 2, the sides of the plug body do not interfere with the top part 44,45 of the levers and a pressure exerted on the latter from the outside allows them to be moved towards each other, opening the opposite ends where the engaging teeth such as 38 are situated.

It should be noted that the engaging teeth such as 38 are provided with an inclined receiving surface so that a pushing force exerted on the inclined surfaces, from the inside outwards, allows them to be opened and consequently the opposite ends 44,45 of the levers to be moved towards each other if the plug body is in the disconnected operating position.

It is therefore clear how it is possible to perform engagement and disengagement of the plug with/from the bus duct.

Starting from the electrically disconnected operating position, ensured by engagement of the pins such as 38 inside the seats 40,41, the frame may be arranged on the bus duct in the desired location and in the relative position uniquely ensured by mechanical polarization thereof (and the frame) and engaged by exerting a convenient pressure on the upper side of the plug body so that both the internal projections 31 of the two arms 29,30 and the teeth such as 38, sliding on the flanges 12,13 of the bus duct, resiliently pass over them and engage with them.

The length of the pins such as 39 is such that, during this step, they remain engaged in the seats 40,41 even though the ends 44,45 of the levers 36,37 move towards each other.

Therefore, during the course of the engaging operation and, once engagement has occurred, the plug body remains in the electrically disconnected operating position.

It is clear that, in order to perform engagement, it is also possible to exert a pressure on the bottom part of the levers 23,24 in the zone defined by the reference number 47 (for the lever 24) so as to open the engaging teeth 38 and facilitate the passing movement over the flanges 12,13.

Once engagement has occurred, in order to arrange the plug body in the electrically connected position, it is sufficient to press externally on both the top ends of the levers 23,24 in the zone defined by the reference number 46 for the lever 24 and in the corresponding zone of the lever 23 (zones which are conveniently knurled for better gripping), moving them towards each other, and at the same time push the body towards the support frame.

The movement together of the top part of the lever arms causes disengagement of the pins, such as 39, from the seats 40,41 and the displacement into the electrically connected operating position, following which, with release of the top ends of the levers 23,24, the pins such as 39 engage inside the seats 42,43, keeping the plug body stably in the electrically connected operating position.

The operation for disconnecting the plug from the bus duct is entirely similar, although performed in the reverse order.

With the plug body in the electrically connected operating position, by exerting a pressure on the top part of the levers 23,24, in the zone defined (for the lever 24) by the reference number 46, the locking pins such as 39 are disengaged from the respective seats 42,43 and it is possible to rotate the plug body 19, arranging it in the disconnected operating position, with the pins engaged in the seats 40,41.

At this point, by pressing the levers 23,24 of the plug body in the zone defined, in the case of the lever 24, by the reference number 47 (zone which is conveniently knurled so as to be able to exert a better grip), it is possible to exert indirectly on the top part 44,45 of the levers 36,37 of the frame a pushing force which opens the bottom part of the levers 36,37 and causes disengagement of the teeth, such as 38, from the flanges 12,13 of the bus duct and allows removal of the entire plug from the bus duct.

Both the operation of connecting the plug and the operation of removing it may be easily performed using one hand (for example the plug may have dimensions of about 55x95x40 mm) without the need for any auxiliary tool.

By way of a final consideration it may be pointed out that the levers 36,37 are provided, each on their outer side, with a raised rim 48 which embraces the locking pin 39 during the whole of its movement from one locking seat to the other one and prevents, owing to interference with the pin 39, any additional movement.

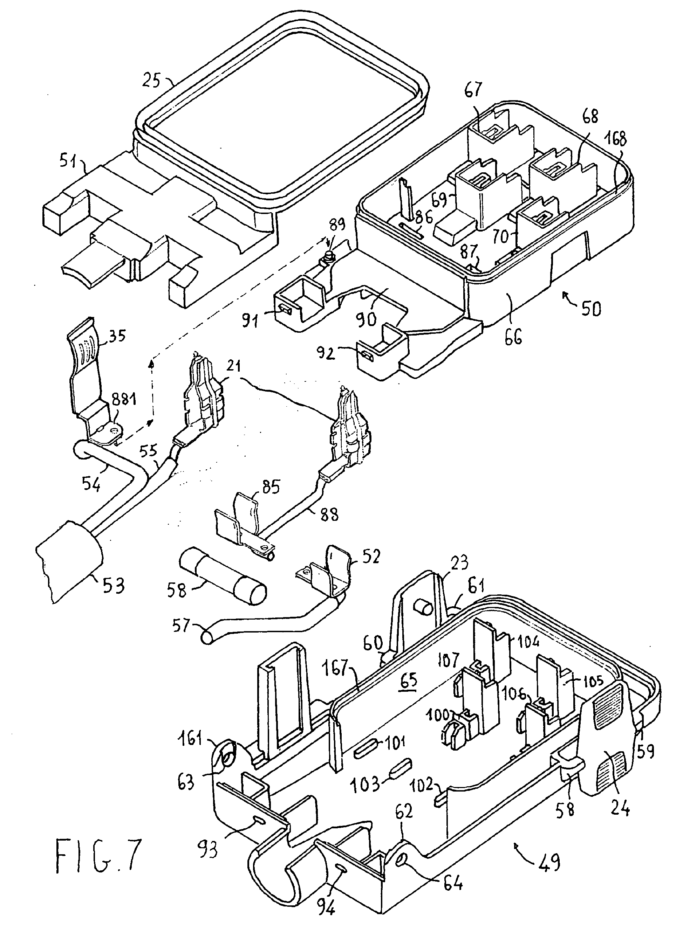

Having clarified these aspects, it is possible to consider in detail the structure of the plug body 19 with combined reference to Figures 4 and 7 which respectively show an assembled perspective view and an exploded perspective view thereof.

The plug body 19 consists essentially (Fig. 7) of an outer shell 49 made of an insulating plastic material, such as nylon and the like, a contact clamp support piece 50 which is also made of insulating plastic material (nylon and the like) and a block 51 made of resilient material (co-moulded onto the shell 49 and support piece 50 at the end of the assembling process of the plug body) and incorporating the end 53 of a sheathed electric cable, its terminals 54,55,56,57 pre-connected to the contact pins 21, to the earth contact lug 35 and, where applicable, to a clip 52 for holding the fuse 58.

The block 51 also extends as a single piece so as to form the resilient seal 25 which ensures the watertightness of the connection between the plug body and the bus duct.

The sides of the outer shell 49 are provided with the already mentioned operating levers 23,24 which are hinged on the sides by means of side lugs 58,59,60,61 arranged centrally with respect to the levers and two relatively elastic flanges 161,62 in which the seats 63,64 for the hinging pins 20 of the support frame are formed.

The flanges 161,62 have suitable undercuts for allowing easy snap-engagement of the pins 20 inside the seats 63,64.

The outer shell 49 forms a housing for the clamps support piece 50, with a peripheral wall 65 which embraces the clamps support piece and is juxtaposed in close contact with the peripheral wall 66 thereof.

At the top the peripheral walls 65,66 have a convenient undercut 167,168, respectively.

The undercuts, juxtaposed, form a seating recess for the bottom part, as viewed in Figures 4,7, of the seal 25.

Compartments 67,68,69,70 with vertical walls, which (in the preferred embodiment described) are four in number and open on one side, at the bottom and at the top, are formed inside the support piece 50 and may house inside each of them a contact clamp 21.

Figure 5 shows schematically a partially sectioned and enlarged perspective view of the structure of one of these compartments which comprises two sidewalls parallel to each other (one of which, 71, is visible, the other one being removed so as to allow viewing of the inside of the compartment) and interconnected by a transverse wall 72.

A support part 73, on which a contact clamp 21 is mounted, extends from the wall 72, between the two sidewalls.

Figure 6 shows an exploded and an enlarged view of a preferred embodiment of the contact clamps 21.

The clamp comprises a contact part 173, which is formed by means of blanking from a copper/brass strip, which is tin or silver-plated, and folded so as to form a saddle 74 which extends in the form of two opposite and pointed arms 75,76 which are intended to perforate the insulating plastic sheet 10 (Figs. 1,2) and enter into contact with a conducting bar of the bus duct.

The saddle also extends in the form of a connection terminal 77 to which the end of a lead is connected by means of electric spot-welding.

In order to ensure a suitable contact pressure on the arms 75,76, the pin also comprises a rider 78 consisting of a steel music wire or strip, folded so as to form an open ring which is mounted on the saddle 74, embracing it.

The rider 78 extends in the form of two legs 79,80 which are arranged on the outer side of the arms 75,76, pressing them against each other.

The end of the legs 79,80 is conveniently pointed and extends slightly beyond the end of the arms 75,76 so as to initiate, when the plug is pushed into the electrically connected operating position, perforation of the insulating sheet 10, with greater efficiency than the arms 75,76 which merely widen the perforation.

For correct positioning of the rider 78 on the saddle 74, the saddle is conveniently provided with a seating recess 81 and with projections 82 which are obtained by folding two pairs of tongues which extend from the sides of the saddle.

The saddle is fitted on the support 73 (Fig. 5) by inserting the clamp, assembled and wired, inside the insulating compartment through the bottom opening of the compartment.

The operation is performed in two stages: firstly the clamp is inserted vertically into the compartment and then displaced horizontally, as indicated by the arrow 84 which relates Figure 5 to Figure 6.

Clearly the operation is performed simultaneously for all the pins which may be present in the plug body (in the preferred embodiment described and shown, up to a maximum of four) using automatic or semi-automatic machines (depending on the production volumes).

Let us consider Figures 4 and 7 again.

Advantageously, although not necessarily, in the preferred embodiment, the support 50 is provided internally with a housing for seating at least one fuse 58 with associated holder clips 52,85. The housing is arranged inside the rim formed by the seal 25 and is accessible, for checking and/or replacement of the fuse, only after the plug has been removed from the bus duct.

Conveniently the fuse housing may be closed by a protective lid, not shown, which is removably fastened to the contact pin support piece 50 and arranged inside the window defined by the seal 25.

In a similar way to the contact clamps 21, the clips 52,85 are inserted inside the fuse housing, each through a pair of openings which are present in the bottom of the support piece 50 and two of which 86,87 are visible in Figure 7.

As already mentioned, when fitting of a fuse is envisaged, one of the two clips (in Figure 7 the clip identified by reference number 52) is connected to a terminal of the multipole cable 53.

The other clip is connected, by means of a portion of electrical lead 88, to one of the contact clamps 21.

Connection of the lead is performed (preferably) by means of electric spot-welding.

Even though it is possible to use one of the bus duct conductors as an earth conductor, in the preferred embodiment, the metal casing 14 of the bus duct (Fig. 1) is advantageously used as an earth conductor.

The earth connection, as already mentioned, is formed using the shoe 35 seated inside the support arm 34 and provided with a fixing foot 881 which is engaged on a short pin 89 formed on a lug 90 of the clamps support piece.

The lug 90 extends in two arms which extend on the sides of the end of the multipole cable 53.

The lug 90 is also housed inside the shell 49 inside which it snap-engages by means of the interaction of two teeth 91,92 with corresponding openings 93,94 formed in the peripheral wall of the shell.

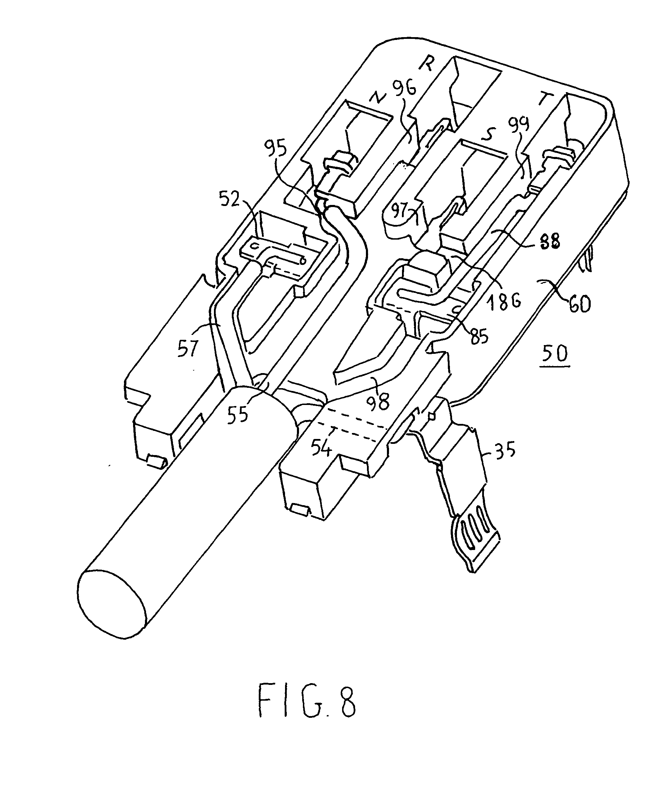

Figure 8 is a perspective view, from below (with reference to the view of Figure 7), of the clamps support piece after wiring has been performed.

It can be noted that the bottom part of the support piece 50 has, formed therein, channels for guiding the various leads from the end of the sheathed cable as far as the various compartments housing the clamps, including the fuse holder clips.

Different types of connection are possible.

In the embodiment shown in Figures 7 and 8 a lead 57 is connected to the fuse holder clip 52 and, via the fuse, to the clip 85 which is in turn connected via the lead portion 88 to a contact clamp intended to come into contact with one phase, for example the phase T of the three-phase system distributed by the bus duct.

A second lead 55 of the multipole cable is connected to a contact clamp intended to come into contact with the neutral N, and a third lead 54 (of the multipole cable) passing underneath the clamps support piece, as shown in Figure 8, is connected to the earth contact shoe 35.

With this arrangement connection to one of the three phases RST of a three-phase system, to the neutral N and to earth is obtained, with the phase protected by a fuse.

This is the connection most frequently used and must offer the possibility of choosing between the three phases so as to achieve load balancing.

For this purpose the fuse holder clip 85 may be connected to the phase T, as shown, or, via the channel 186, to one or other of the phases R,S.

It is clear that, if the protection provided by the fuse 58 is not required, the latter may be dispensed with, together with the associated holder clips, and it is possible to connect a first lead to neutral and a second lead to any one of the three phases using the channel 96 for connection to the phase R, the channel 97 for connection to the phase S and the channels 98,99 in series with each other, for connection to the phase T.

Clearly it is also possible to perform the connection to all three phases R,S,T and to the neutral N, without envisaging the presence of a fuse.

With a clamps support piece of this type it is therefore possible to obtain, without the need for structural modifications and with only modification of the interconnections performed automatically during the assembly process, prewired plugs able to satisfy the most varied requirements.

Conveniently, an adhesive label 103 (Fig. 3), applied onto the outer side of the shell 49, may indicate to the user the electrical configuration of the plug.

Alternatively the indication may be obtained by means of legible lettering in relief, formed during the shell moulding process, or by using for at least one of the visible components of the plug body (outer shell 49 and/or waterproof block 51) materials with a different colour indicating the plug configuration.

By way of conclusion of the description let us consider Figure 7 again.

When the clamps support piece 50, which is prewired as shown in Figure 8 (or prewired in accordance with the various possible variants) is inserted into the shell 49, suitable reliefs 100,101,102 formed on the bottom of the shell fix the contact clamps 21 and the fuse holder clips 52,85, if present, in their seats and prevent vertical movements thereof.

Moreover a plurality of towers 104,105,106,107 with vertical walls, formed on the bottom of the shell, each penetrate into the compartments 67,68,69,70, respectively, closing the open side surface thereof and preventing any transverse movement of the contact clamps 21.

At this point the shell 49 and the support piece 50, thus assembled, are arranged inside a mould into which a resilient plastic material, such as Santoprene® and the like is injected, forming the seal 25 and the block 51.

The latter incorporates the end of the sheathed cable 53 and the various terminals of the leads, forming, as shown in Figure 4, a unitary plug body which is mechanically robust and waterproof, except for the window which is surrounded by the seal 25 and from which the arms of the contact clamps protrude.

As already mentioned, the seal 25 ensures the watertightness of the connection between the plug body and bus duct and hermetic sealing of the entire plug when the latter is in the working position.

The above description relates only to a preferred embodiment, but it is clear that many variants may be applied.

In particular:
- the earth contact shoe may be replaced by a contact clamp, such as the contact clamp 21, if the bus duct is provided with a conducting bar having the function of an earth conductor;
- the seat for the fuse and the associated holder clips may be eliminated, further reducing the dimensions of the plug; on the other hand, it is possible to envisage a seat for a plurality of fuses arranged in a direction transverse with respect to that shown in the figures, so as to ensure protection for all the phases of a multiphase system;
- in the case where the bus duct is intended for the distribution of a single-phase voltage, the number of contact clamps and the associated compartments may be reduced, as well as the overall volume of the plug.

## Claims

1. Waterproof prewired plug for electrical connection to a bus duct (17), of the type in which an insulating body (1) houses a plurality of conductors (6,7,8,9) inside slots closed hermetically by a sheet of insulating material (10) along their entire length, said plug comprising:
- a frame (18) for supporting and fastening to said bus duct and
- a plug body (19) which is sealed, except for inside a window surrounded by a resilient rim seal (25), said plug body being hinged with said support frame (18) for assuming an operating position where it is electrically connected to the conductors of the bus duct and an operating position where it is disconnected, said body being provided with said window from which a plurality of electrical contact clamps (21) protrude, said clamps, owing to said support frame fastened to said bus duct and owing to said electrically connected operating position, perforating said insulating sheet (10) and establishing electrical contact with said conductors (6,7,8,9), said seal (25) ensuring the watertightness of the connection between said plug body (19) and the sheet (10) of said bus duct,
wherein
- said plug body (19) comprises an outer shell (49) made of insulating plastic material and a part (50) for supporting said clamps, also made of insulating plastic material and housed inside said outer shell and connected to the latter in a watertight manner by said seal;
- at least one of said clamps is connected in a permanent manner to one of a plurality of terminals (54,55,56,57) of a sheathed electric cable (53), said terminals being housed inside channels formed in said support piece (50); and
- said rim seal extends to form a sealed block (51) integral with the outer shell (49) and the support piece (50), said block (51) enclosing in a watertight manner and mechanically fixing between them said plug body, said terminals and the end of said sheathed cable.

2. Plug according to Claim 1, in which said support frame (18) is provided with means (36,37) for engagement with said bus duct, which can be operated manually for engagement and disengagement only for said disconnected operating position and in which said plug body (19) is provided with means (23,24) cooperating with said engagement means so as to operate them and lock the body in one or other of said operating positions.

3. Plug according to Claim 1 or 2, in which said body comprises an earth contact shoe (35) which is electrically connected to a terminal (54) of said sheathed cable (53), and said shoe, when said support frame is engaged on said bus duct, establishes electrical contact with an outer metal casing (14) of said bus duct for both said operating positions.

4. Plug according to any one of the preceding claims, in which said clamps support piece (50) contains a seat for at least one fuse (58) and associated prewired holder clips (52,85), said seat being accessible through said window.

5. Plug according to any one of the preceding claims, in which said contact clamps (21) comprise a contact part (173) with a connection terminal (77) and juxtaposed contact arms (75,76) and a spring rider (78) fitted onto the contact part (173) so as to press said arms against each other, said rider (78) having pointed legs (79,80) for perforating said insulating sheet (10).

6. Plug according to any one of the preceding claims, in which said support frame (18) comprises mechanical polarization means (32,38) for ensuring a unique position for engagement with said bus duct.

7. Plug according to any one of the preceding claims, in which said plug body (19) has visible information (103) indicating the internal electrical configuration of said plug.

## Patentansprüche

1. Vorverdrahteter wassergeschützter Stecker zur elektrischen Verbindung mit einer Bus-Durchführung (17) von der Art, bei der ein isolierender Körper (1) eine Mehrzahl von Leitern (6, 7, 8, 9) innerhalb von Längsnuten aufnimmt, die von einer Lage insolierendem Materials (10) entlang ihrer gesamten Länge hermetisch geschlossen sind, wobei der Stecker umfasst:
einen Rahmen (18) zum Halten und Befestigen der Bus-Durchführung und
einen Steckerkörper (19), der abgedichtet ist, mit Ausnahme eines Fensters, das von einer flexiblen Randdichtung (25) umgeben ist, wobei der Steckerkörper mit dem Halterahmen (18) schwenkbar verbunden ist, um eine Betriebsposition einnehmen zu können, bei der er elektrisch mit den Leitern der Bus-Durchführung verbunden ist, und einer Betriebsposition, in der er nicht verbunden ist, wobei der Körper mit dem Fenster ausgestaltet ist, aus dem eine Mehrzahl elektrischer Kontaktklammern (21) hervorstehen, wobei die Klammern aufgrund des mit der Bus-Durchführung befestigten Halterahmens und aufgrund der elektrisch verbundenen Betriebsposition die Isolierlage (10) perforieren und einen elektrischen Kontakt mit den Leitern (6, 7, 8, 9) herstellen, wobei die Dichtung (25) die Wasserdichte der Verbindung zwischen dem Körper (19) und der Lage (10) der Bus-Durchführung sicherstellt,
wobei
der Steckerkörper (19) eine äußere Hülle (49) aus einem isolierenden Kunststoffmaterial und ein Teil (50) zum Halten der Klammern aufweist, das ebenfalls aus Kunststoffmaterial gebildet und in der äußeren Hülle aufgenommen ist, und mit der letzteren wasserdicht durch eine Dichtung verbunden ist,
wobei zumindest eine der Klammern auf permanente Art mit einem einer Mehrzahl von Terminals (54, 55, 56, 57) eines ummantelten elektrischen Kabels (53) verbunden ist, wobei die Terminals innerhalb von Kanälen aufgenommen sind, die von dem Halteteil (50) gebildet sind; und
wobei die Randdichtung sich entlang eines versiegelten Blocks (51) erstreckt, der einstückig mit der äußeren Hülle (49) und dem Halteteil (50) ist, wobei der Block (51) auf wasserdichte Art und mechanisch fest zwischen diesen den Steckerkörper, die Terminals und das Ende des ummantelten Kabels aufnimmt.

2. Stecker nach Anspruch 1, bei dem der Halterahmen (18) mit Mitteln (36, 37) ausgestattet ist, für den Eingriff mit der Bus-Durchführung, die nur in der Loslösungsbetriebsposition für den Eingriff und das Loslösen, per Hand bedient werden können, und wobei der Steckerkörper mit Mitteln (23, 34) ausgestattet ist, die mit dem Eingriffsmittel zusammenwirken, um so diese zu betätigen und den Körper in einer oder in der anderen Betriebsposition zu verriegeln.

3. Stecker nach Anspruch 1 oder 2, bei dem der Körper einen Erdungskontaktschuh (35) aufweist, der direkt mit einem Terminal (54) des ummantelten Kabels (53) verbunden ist, und wobei der Schuh, wenn der Rahmen im Eingriff mit der Bus-Durchführung ist, einen elektrischen Kontakt mit einem äußeren Metallgehäuse (14) der Bus-Durchführung für beide Betriebspositionen herstellt.

4. Stecker nach einem der vorangehenden Ansprüche, bei dem das Klammerhaltestück (50) einen Sitz für zumindest eine Sicherung (58) aufweist und vorverdrahtete Halteclips (52, 58) hat, wobei der Sitz durch das Fenster zugänglich ist.

5. Stecker nach einem der vorangehenden Ansprüche, bei dem die Kontaktklammern (21) ein Kontaktteil (173) mit einem Verbindungsterminal (77) und einander gegenüberliegenden Kontaktarmen (75, 76) und einem Federanhang aufweisen, der auf das Kontaktteil (173) aufgebracht ist, um so die Arme gegeneinander anzudrücken, wobei der Anhang (78) hervorstehende Beine (79, 80) hat, um die Isolierlage (10) zu perforieren.

6. Stecker nach einem der vorangehenden Ansprüche, bei dem der Halterahmen (18) mechanische Polarisationsmittel (32, 38) zur Sicherstellung einer einmaligen Position für den Eingriff mit der Bus-Durchführung aufweist.

7. Stecker nach einem der vorangehenden Ansprüche, bei dem der Steckerkörper (19) sichtbare Information (103) aufweist, die die interne elektrische Konfiguration des Steckers anzeigt.

## Revendications

1. Prise étanche précâblée destinée à une connexion électrique sur un conduit omnibus (17), du type dans lequel un corps isolant (1) reçoit une pluralité de conducteurs (6, 7, 8, 9) à l'intérieur de fentes fermées de manière hermétique par une feuille de matériau isolant (10) sur toute leur longueur, ladite prise comprenant :
- un cadre (18) destiné au support et à la fixation audit conduit omnibus, et
- un corps de prise (19) qui est scellé, à l'exception, à l'intérieur d'une fenêtre entourée par un joint de lunette élastique (25), ledit corps de prise étant articulé avec ledit cadre de support (18) de manière à prendre une position de fonctionnement dans laquelle il est connecté de manière électrique aux conducteurs du conduit omnibus, et une position de fonctionnement dans laquelle il est déconnecté, ledit corps étant doté de ladite fenêtre à partir de laquelle une pluralité d'ergots de contacts électriques (21) font saillie, lesdits ergots, en raison dudit cadre de support fixé audit conduit omnibus et en raison de ladite position de fonctionnement où il est connecté de manière électrique, perforant ladite feuille isolante (10) et établissant un contact électrique avec lesdits conducteurs (6, 7, 8, 9), ledit joint (25) assurant l'étanchéité de la connexion entre ledit corps de prise (19) et la feuille (10) dudit conduit omnibus,
dans laquelle
- ledit corps de prise (19) comprend une enveloppe extérieure (49) réalisée dans une matière plastique isolante et une partie (50) destinée à supporter lesdits ergots, réalisés également dans une matière plastique isolante et logés dans ladite enveloppe extérieure intérieure et connectés à cette dernière d'une façon étanche grâce audit joint ;
- au moins l'un desdits ergots est connecté d'une façon permanente à l'une d'une pluralité de bornes (54, 55, 56, 57) d'un câble électrique gainé (53), lesdites bornes étant logées à l'intérieur de canaux formés dans ladite partie de support (50) ; et
- ledit joint de lunette s'étend de manière à former un bloc scellé (51) d'une pièce avec l'enveloppe extérieure (49) et la partie de support (50), ledit bloc (51) entourant d'une façon étanche et fixant de manière mécanique entre eux ledit corps de prise, lesdites bornes et l'extrémité dudit câble gainé.

2. Prise selon la revendication 1, dans laquelle ledit cadre de support (18) est doté de moyens (36, 37) pour une mise en prise avec ledit conduit omnibus, qui peuvent être actionnés de manière manuelle pour une mise en prise et un dégagement seulement pour ladite position de fonctionnement où il est déconnecté et dans laquelle ledit corps de prise (19) est doté de moyens (23, 24) qui coopèrent avec lesdits moyens de mise en prise de manière à les actionner et à verrouiller le corps dans l'une ou l'autre desdites positions de fonctionnement.

3. Prise selon la revendication 1 ou la revendication 2, dans laquelle ledit corps comprend un frotteur de contact de terre (35) qui est connecté de manière électrique à une borne (54) dudit câble gainé (53), et ledit frotteur, lorsque ledit cadre de support est mis en prise sur ledit conduit omnibus, établit un contact électrique avec une enveloppe métallique extérieure (14) dudit conduit omnibus pour les deux dites positions de fonctionnement.

4. Prise selon l'une quelconque des revendications précédentes, dans laquelle ladite partie de support d'ergots (50) contient un siège pour au moins un fusible (58) et des clips de supports précâblés associés (52, 85), ledit siège étant accessible à travers ladite fenêtre.

5. Prise selon l'une quelconque des revendications précédentes, dans laquelle lesdits ergots de contact (21) comprennent une partie de contact (173) avec une borne de connexion (77) et des bras de contact juxtaposés (75, 76) et un cavalier de ressort (78) adapté sur la partie de contact (173) de manière à presser lesdits bras l'un contre l'autre, ledit cavalier (78) présentant des jambes pointues (79, 80) destinées à perforer ladite feuille isolante (10).

6. Prise selon l'une quelconque des revendications précédentes, dans laquelle ledit cadre de support (18) comprend des moyens de polarisation mécanique (32, 38) destinés à garantir une seule position de mise en prise avec ledit conduit omnibus.

7. Prise selon l'une quelconque des revendications précédentes, dans laquelle ledit corps de prise (19) présente des informations visibles (103) destinées à indiquer la configuration électrique intérieure de ladite prise.
